# FASCICULE DE BREVET EUROPEEN

(11) **EP 0 516 527 B1**
(45) Date de publication et mention de la délivrance du brevet: **19.07.1995**
(21) Numéro de dépôt: 92401434.3
(22) Date de dépôt: 26.05.1992
(51) Int. Cl.: B60R 16/02, B60Q 1/14, B60Q 1/20

(54) **Dispositif d'éclairage et/ou de signalisation utilisés en situation de brouillard**
Beleuchtungs- und/oder Anzeige-Vorrichtung für Nebelwetter
Lighting and/or signalling device for use during fog

(30) Priorité: 29.05.1991 FR 9106477
(43) Date de publication de la demande: 02.12.1992
(73) Titulaire: VALEO VISION, 93012 Bobigny Cédex (FR)
(72) Inventeur: Brassier, Marc, F-94300 Vincennes (FR); Rydel, Charles, F-75019 Paris (FR)
(74) Mandataire: Lemaire, Marc

(56) Documents cités:
- EP-A- 0 072 406
- FR-A- 2 228 367
- FR-A- 2 262 612
- FR-A- 2 491 648
- FR-A- 2 560 353
- US-A- 4 102 426

## Description

La présente invention concerne les dispositifs d'éclairage et/ou de signalisation utilisés en situation de brouillard comme connu de FR-A-2 262 612.

L'utilisation à mauvais escient de tels dispositifs et en particulier des feux arrière de brouillard, provoque une gêne et des risques pour les conducteurs de véhicules se trouvant derrière un véhicule dont le feu de brouillard est allumé alors que les conditions de visibilité ne le justifient pas ou rendent leur utilisation dangereuse.

En effet, ces derniers peuvent être éblouis et ne pas distinguer rapidement un allumage des feux indicateurs de freinage du véhicule précédent traduisant un freinage, ce qui peut être la cause de collisions.

L'objet de la présente invention est de pallier ces inconvénients.

En effet, l'invention concerne un dispositif d'éclairage ou de signalisation tel qu'un feu arrière de brouillard comme défini dans la revendication 1.

Des modes particuliers de réalisation de cette invention sont définis dans les revendications 2-18.

D'autres caractéristiques et avantages de la présente invention seront mieux compris à l'aide de la description et des dessins annexés qui sont :
- la figure 1 : un schéma général d'un dispositif d'éclairage et/ou de signalisation utilisant un détecteur de brouillard selon l'invention ;
- la figure 2 : un diagramme représentant la relation entre l'activation du dispositif de l'invention et la mesure du degré d'opacité du brouillard ;
- les figures 3 et 4 : les vues arrière et de côté d'un véhicule équipé d'au moins un dispositif d'éclairage et/ou de signalisation mettant en oeuvre l'invention ;
- les figures 5 et 6 respectivement des vues de face et une vue en coupe vue de dessus d'un dispositif d'éclairage et/ou de signalisation selon l'invention ;
- les figures 7a à 7d : des schémas représentants d'organes émetteur et récepteur d'infrarouges, munis ou non d'une optique intermédiaire destinés à un dispositif selon l'invention ;
- la figure 8 : un schéma d'un mode de réalisation d'un dispositif selon l'invention implanté dans un véhicule automobile ;
- la figure 9 : le schéma d'un module électronique équipant un dispositif selon la figure 8 ;
- la figure 10 : un mode de réalisation de l'amplificateur composant du circuit indiqué à la figure 9 ;
- la figure 11 : un mode de réalisation de l'amplificateur réalisant un filtrage adapté du signal de détection de brouillard selon le schéma de la figure 10 ;
- la figure 12 : un mode de réalisation des circuits oscillateurs attaquant l'organe émetteur d'infrarouge et de détection synchrone du mode de réalisation de la figure 9 ;
- les figures 13 et 14 : deux matrices de fonctionnement données à titre d'exemples ;
- la figure 15 : un circuit logique de fonctionnement mis en oeuvre dans l'invention.

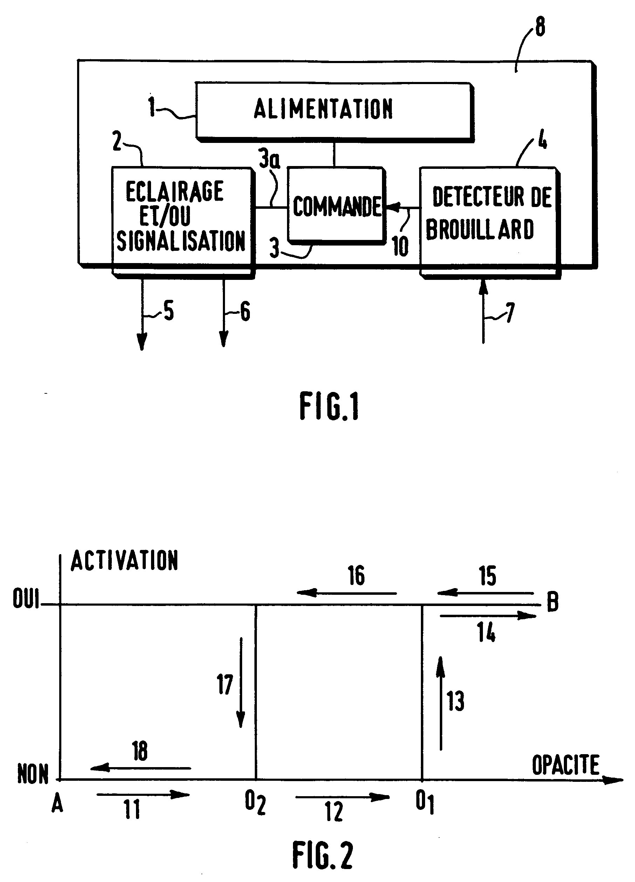

A la figure 1, on a représenté un schéma général d'un dispositif d'éclairage et/ou de signalisation destiné à émettre un signal lumineux en cas de brouillard et muni d'un détecteur de brouillard selon l'invention.

Un tel dispositif 8 comporte des moyens d'alimentation électriques 1 constitués par exemple par la batterie embarquée à bord du véhicule, dont une première borne est connectée par au moins un câble à un connecteur du feu, et dont une seconde borne est mise au châssis par une tresse. Le retour de masse sur le dispositif se fait aussi par une tresse de masse reliée au châssis (non représenté).

Cette alimentation envoie de l'énergie électrique à un circuit de commande 3 dont l'état passant ou bloqué et/ou la fonction de transfert de la puissance électrique fournie par les moyens d'alimentation électriques 1 est commandé(e) par un signal de commande 10 émis par un circuit détecteur de brouillard 4 installé à l'intérieur du dispositif 8. Le circuit de commande 3 comporte une sortie 3a d'alimentation électrique connectée à l'entrée de moyens d'éclairage et/ou de signalisation 2 destinés à émettre de la lumière d'éclairage 5 et/ou de la lumière de signalisation 6.

Le détecteur de brouillard reçoit un signal 7 représentatif de l'opacité du brouillard dans lequel évolue le dispositif 8. Ce signal est transformé en un signal électrique de commande 10 selon une courbe caractéristique connue. Le détecteur de brouillard exécute le test d'au moins une condition d'activation. Le résultat positif du test de la condition d'activation permet de déclencher le signal de commande 10 en fonction de paramètres pré-enregistrés dans le circuit détecteur 4.

A la figure 2, on a représenté un diagramme de fonctionnement du test permetttant l'activation 10 en fonction du degré d'opacité mesuré 7 par le détecteur de brouillard de la figure 1.

Sur le diagramme de la figure 2, on remarque que l'activation est "en tout ou rien", c'est-à-dire que ce diagramme représente le fonctionnement d'un mode de réalisation dans lequel le circuit de commande est constitué par un interrupteur commandé par le signal 10 et disposé sur le chemin d'alimentation reliant les moyens d'éclairage et/ou de signalisation 2 aux moyens d'alimentation électriques 1 dans le dispositif 8 de la figure 1.

Dans un autre mode de réalisation, l'activation est progressive, les fronts de déclenchement de la figure 2 présentant alors des pentes non nulles et des arrondis.

Dans le mode de réalisation représenté à la figure 2, au début A du fonctionnement, on se situe sur la flèche 11 dans un état non activé du détecteur 4. Au point 1, le circuit de commande 3 est ouvert et les moyens d'éclairage et/ou de signalisation 2 ne sont pas alimentés.

L'opacité du brouillard augmentant, on dépasse un niveau d'opacité O₂ à la flèche représentée 12 à la figure 2. Dans le mode de réalisation représenté, le détecteur de brouillard n'envoie toujours pas de signal d'activation au niveau "haut" indiqué par la référence "oui" à la figure 2. Quand l'opacité mesurée par le détecteur de brouillard par le signal 7 dépasse un premier seuil O₁, le détecteur de brouillard 4 change d'état selon la flèche 13 de la figure 2, en passant au niveau "haut" sur sa sortie 10. De ce fait, l'interrupteur constituant le circuit de commande 3 bascule et l'énergie électrique provenant des moyens d'alimentation 1 est transmise aux moyens 2 d'éclairage et/ou de signalisation.

Dans l'exemple de fonctionnement représenté à la figure 2, on se situe ensuite dans le cas où l'opacité augmente le long de la flèche 14 jusqu'à un point noté B.

Quand on part de l'état activé, par exemple du point B de la figure 2, le long de la flèche 15, le détecteur de brouillard 4 de la figure 1 émet un signal d'activation "oui" sur sa sortie 10 en permanence tant que l'opacité ne revient pas sous un second seuil d'opacité O₂ inférieur au premier seuil d'opacité O₁ qui a provoqué le déclenchement de l'activation, ainsi qu'on l'a vu ci-dessus. Le diagramme d'activation passe par la flèche 17, puis éventuellement si l'opacité diminue encore, reste à l'état non activé pendant tout le parcours de la flèche 18 jusqu'au point A.

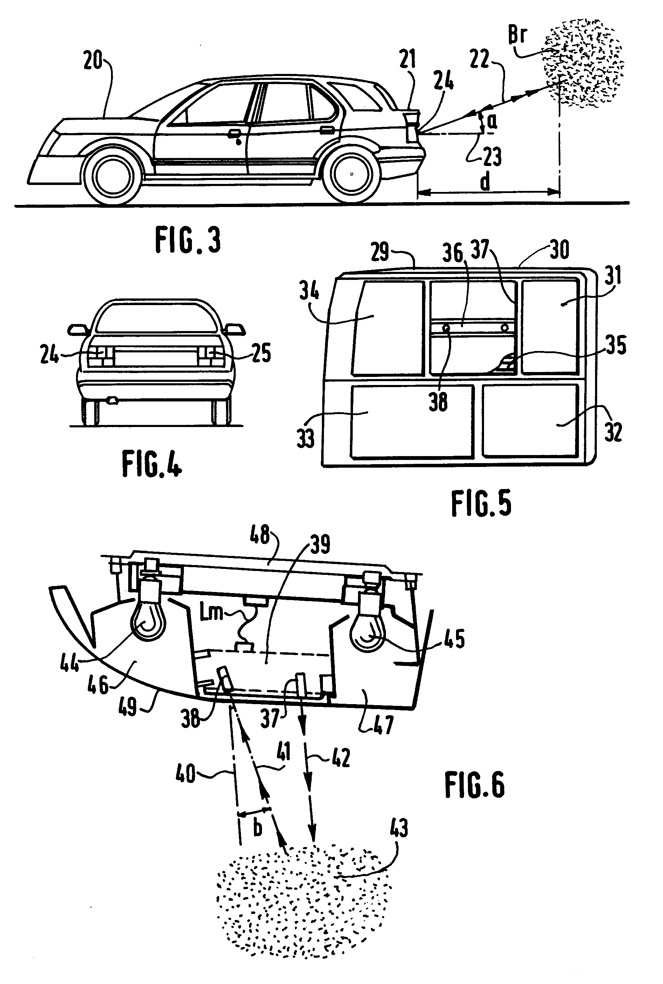

Aux figures 3 et 4, on a représenté un véhicule équipé d'au moins un dispositif selon l'invention. Un tel véhicule 20 présente des feux arrière 24 et 25 qui sont munis, au moins pour l'un d'entre eux, d'un dispositif détecteur de brouillard selon le schéma de la figure 1.

Dans ce qui suit, à titre d'exemple préférentiel d'application de l'invention, le détecteur de brouillard 4 de la figure 1 est un détecteur de type infrarouge. Dans un tel détecteur de brouillard selon l'invention, la détection de brouillard est basée sur une mesure de la rétrodiffusion des ondes infrarouges.

Dans un mode préféré de réalisation de l'invention, la rétrodiffusion est excitée par un faisceau infrarouge émis par le détecteur 4 du circuit de la figure 1.

Dans d'autres modes de réalisation de l'invention, on utilise d'autres sources infrarouges.

On a remarqué que l'intensité de la réflexion par le brouillard, ou rétrodiffusion, d'un signal infrarouge dépendait notamment de la direction de réception, de la longueur d'onde du signal et du diamètre de la sphère de réflexion. En particulier en examinant l'intensité réfléchie à partir d'une source monochromatique, on a remarqué qu'il existait au moins deux valeurs de l'angle de réception pour lesquelles l'intensité reçue dépendait peu de la dimension de la surface de réflexion. Comme la surface de réflexion est caractéristique de l'opacité du brouillard, on conçoit qu'en choisissant convenablement la longueur d'onde des infrarouges émis et la direction de détection pour que l'intensité du signal reçu soit peu dépendante de la longueur d'onde et de la surface de réflexion, on pouvait détecter facilement au moins un seuil d'opacité du brouillard.

A la figure 3, les faisceaux 22 sont dirigés selon un angle "a" au-dessus de l'horizontal 23 vers une masse de brouillard Br à l'arrière du véhicule. En choisissant convenablement l'angle "a", ainsi qu'on l'a vu ci-dessus, et notamment pour détecter l'opacité du brouillard à proximité immédiate de l'arrière du véhicule d'une part, et d'autre part, à hauteur des yeux d'un conducteur d'un véhicule suiveur (non représenté à la figure 3), la mesure de l'opacité du brouillard Br par le détecteur 24 permet d'éteindre le feu de brouillard porté par le dispositif 24 si l'opacité n'est pas suffisante, supérieure à un seuil O₁ en dessous duquel le rayonnement du feu de brouillard arrière constitue une gêne pour le conducteur du véhicule suiveur (non représenté).

D'autre part dans un mode de fonctionnement automatique de l'invention, quand l'opacité O du brouillard Br dépasse au moins un seuil de détection O₁, le dispositif de signalisation 24 peut être commuté automatiquement. Cette caractéristique de l'invention n'est pas nécessaire à celle-ci. En particulier, ainsi qu'on le verra, on peut utiliser des stratégies tenant compte de la commande classique d'allumage des feux de code par le conducteur du véhicule 20 dans l'habitacle.

A la figure 4, on a représenté un véhicule qui comporte naturellement deux feux arrière. Chaque feu arrière comporte un dispositif selon le schéma de la figure 1. Le véhicule comporte donc aussi deux détecteurs de brouillard.

Cependant dans d'autres modes de réalisation, un seul des deux feux arrière comporte un détecteur de brouillard. La sortie du seuil détecteur de brouillard est transmise par un câble intérieur au véhicule et non représenté à la figure 4, aux deux feux de signalisation 24 et 25, qui comportent chacun les circuits 1,3 et 2 décrits aux figures 1 et 2.

En particulier, l'invention permet que le circuit de détection ainsi que le reste du module électronique de commande du feu d'éclairage et/ou de signalisation soient placés à proximité de celui-ci et préférentiellement dans le même boîtier que lui.

Aux figures 5 et 6, on a représenté une vue de face d'un dispositif d'éclairage et/ou de signalisation selon l'invention, et une coupe transversale dudit dispositif.

A la figure 5, le dispositif 29 d'éclairage et/ou de signalisation comporte principalement :
- un feu de signalisation de stop 34,
- 30 un catadioptre,
- 31 un indicateur de lanterne,
- 33 un clignotant,
- 32 un phare de recul.

Selon l'invention dans un mode préféré de celle-ci, le détecteur de brouillard, inclus dans le module électronique de commande du feu, comporte des moyens d'émission et de réception des ondes électromagnétiques, et notamment infrarouges, permettant la mesure de l'opacité du brouillard, qui sont disposés dans le catadioptre 30 dans une rangée médiane 36 de celui-ci. En particulier, cette disposition présente l'avantage que les émetteurs 37 et récepteurs 38 du rayonnement infrarouge de détection de brouillard ne sont pas apparents de l'extérieur, ce qui améliore l'intégration et l'esthétique du dispositif d'éclairage et/ou de signalisation de l'invention.

A la figure 6, on a représenté une vue en coupe vue de dessus du dispositif de la figure 5. A la figure 6, on a représenté le porte-lampes 48 portant des lampes 44 et 45, par exemple correspondant au feu de stop et au feu de lanterne, qui émettent leurs faisceaux lumineux à travers des optiques 46 et 47. Ainsi qu'il est représenté au dessin sans référence, les lampes 44 et 45 sont placées au foyer de réflecteurs.

D'autre part, le dispositif d'éclairage et/ou de signalisation comporte un module électronique 39 doté notamment d'un émetteur 37 d'un rayonnement infrarouge 42 et d'un récepteur 38 de rayonnement infrarouge 41 rétrodiffusé par du brouillard 43. On remarque que le faisceau d'émission infrarouge 42 est dans le plan contenant l'axe longitudinal du véhicule.

Par contre, la direction de détection du récepteur 38 du faisceau 41 rétrodiffusé fait un angle de réception "b" par rapport à l'axe longitudinal 40 du véhicule.

Le choix des angles "a" de la figure 3 et "b" de la figure 6 permet d'assurer de bonnes conditions de détection du signal de mesure d'opacité, ainsi qu'on l'a décrit ci-dessus.

Le module électronique 39 est notamment connecté par une liaison Lm aux lampes 44 et 45 ainsi qu'à des moyens d'alimentation électriques non représentés à la figure. On remarque que l'ensemble des moyens de l'invention peut être intégré dans un volume réduit. D'autre part, on remarque que l'invention peut être intégrée dans un volume identique à celui des produits standards du commerce.

D'autre part, le dispositif de l'invention peut trouver place dans le cadre d'un multiplexage des signaux de commande du véhicule complet. A cet effet, le dispositif de l'invention peut être relié aux moyens d'alimentation généraux du véhicule, par l'intermédiaire d'un interrupteur intelligent ainsi qu'il est connu.

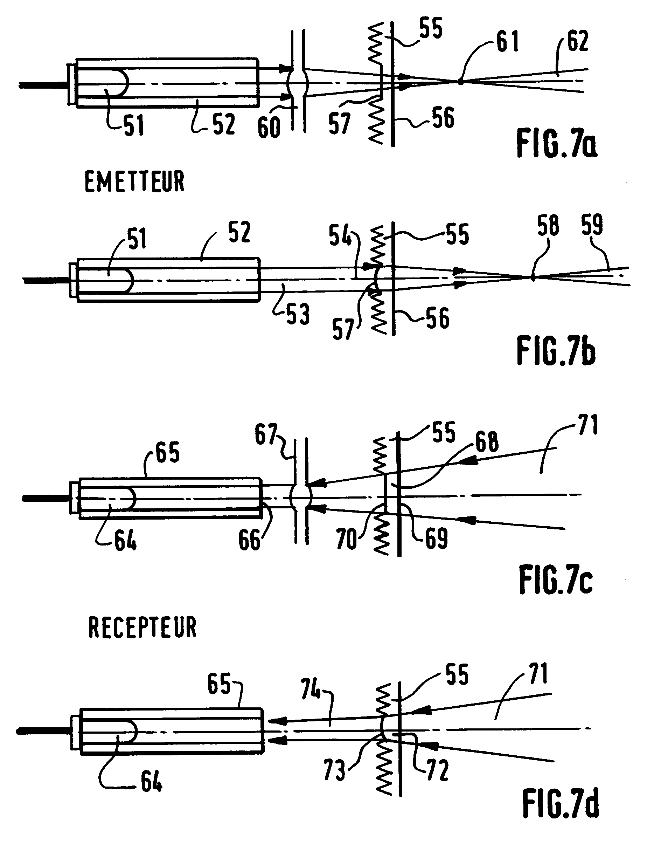

Aux figures 7a et 7b, on a représenté le schéma d'un moyen émetteur d'un rayonnement infrarouge dans deux modes de réalisation préférés de l'invention. L'émetteur de l'invention comporte principalement une diode émettrice d'un rayonnement infrarouge 51, disposée au fond d'un tube 52, destiné à collimater le rayonnement infrarouge émis par la diode 51.

A la figure 7b, le rayonnement infrarouge 53 en sortie du tube 52, traverse une zone 54 plane de passage des infrarouges à travers le verre 55 du catadioptre. Dans un mode de réalisation, le catadioptre 55 présente une face de sortie 56 plane et une face intérieure 57 présentant une courbe destinée à focaliser le rayonnement infrarouge au foyer 58 sur l'axe de transmission des infrarouges 59.

Dans un autre mode de réalisation, le catadioptre 55 présente une fenêtre de passage des infrarouges, dont les deux faces 56 et 57 sont planes mais, dans ce cas, la sortie du tube 52 de collimation du rayonnement infrarouge est disposée vis-à-vis d'une optique intermédiaire 60. Cette optique intermédiaire 60 permet d'obtenir un foyer de convergence 61 du rayonnement infrarouge 62.

Aux figures 7c et 7d, on a représenté deux modes de réalisation d'un moyen récepteur d'infrarouge selon l'invention.

A la figure 7c, une diode infrarouge 64 est disposée au fond d'un tube 65 de collimation. L'entrée 66 du tube de collimation est disposée vis-à-vis d'une optique de collimation convergente 67. Le catadioptre 55 est muni d'une fenêtre de passage 68 comportant une face d'entrée 69 et une face de sortie 70 d'un rayonnement infrarouge 71 provenant de la rétrodiffusion infrarouge produite par le brouillard ambiant. Cette rétrodiffusion produit principalement des rayons infrarouges divergents, que l'optique 67 permet de remettre sous forme d'un faisceau parallèle et/ou convergent.

Dans un autre mode de réalisation, on n'a pas disposé d'optique intermédiaire 67, mais le catadioptre 55 présente une fenêtre de passage du rayonnement infrarouge 71, dont une face 72 d'entrée est plane et une face de sortie 73 est convexe de façon à tranformer en rayons parallèles ou convergents le rayonnement d'entrée 71 dans un faisceau 74 accédant au tube de collimation 65.

L'interposition d'une lentille sur le récepteur permet d'augmenter le champ de détection et améliore ainsi la sensibilité de la détection. Sur l'émetteur, la lentille 60 ou 57,56 permet de focaliser l'endroit où se fera la mesure d'opacité du brouillard de manière précise.

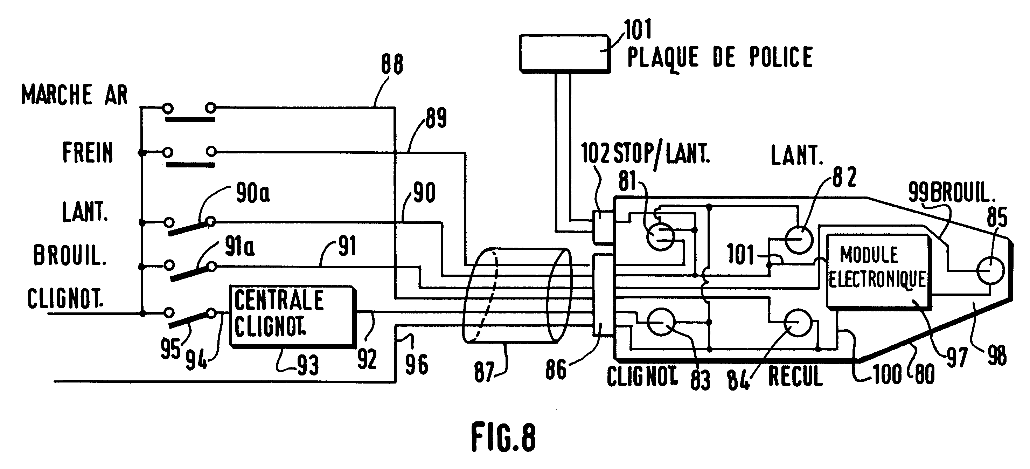

A la figure 8, on a représenté un schéma général d'un dispositif d'éclairage et/ou de signalisation intégré dans un véhicule.

Le dispositif 80 comporte au moins cinq feux respectivement 81 de stop, 82 de lanterne, 83 de clignotant, 84 de recul et 85 de brouillard.

Ces différents feux sont commandés par l'intermédiaire d'un connecteur 86 qui amène les signaux et l'énergie électrique par un câble 87 disposé dans le véhicule, non représenté. En particulier, le câble 87 comporte au moins :
- un fil 88 connecté au levier de changement de vitesses sur la position de marche arrière,
- un fil 89 relié à la pédale et/ou levier de frein,
- un fil 90 qui relie l'interrupteur d'allumage des lanternes 90a à une borne respective des feux 81 de stop et 82 de lanterne,
- un fil 91 qui relie l'interrupteur d'allumage des feux de brouillard 91a,
- un fil 94 qui relie l'interrupteur 95 des clignotants à l'entrée de la centrale clignotante 93 dont la sortie est reliée par le fil 92 au connecteur 86,
- et un fil 96 d'alimentation électrique générale du véhicule. Ce fil 96 présente une extrémité qui peut être connectée notamment au + de la batterie embarquée à bord du véhicule.

D'autre part, le dispositif 80 de l'invention présente, dans le boîtier habituel du feu, un module électronique 97 qui intègre notamment le détecteur de brouillard de l'invention. Le module électronique 97 présente un fil de sortie 98 connecté à une borne d'alimentation du feu de brouillard 85. L'autre borne d'alimentation du feu de brouillard 85 est connectée par un fil 99 au connecteur 86. Ce fil 99 est en connexion directe avec le fil 91 du faisceau 87. Ainsi, selon l'invention, quand le module électronique détecteur de brouillard détecte une opacité importante, le module électronique émet un signal d'activation qui permet de transmettre de la puissance électrique par le fil 98. Mais le feu de brouillard n'est allumé que si le conducteur bascule l'interrupteur 91a installé dans l'habitacle.

Dans d'autres modes de réalisation, le commutateur 91a est toujours fermé et n'est ouvert que quand le conducteur ne souhaite pas allumer les feux de brouillard ou que l'ordinateur de bord bloque l'allumage de celui-ci malgré l'indication du module électronique 97.

D'autre part, le module électronique comporte aussi des fils de sortie 100 et 101 connectés à au moins une borne des quatre feux 81,82,83 et 84 de signalisation et/ou d'éclairage.

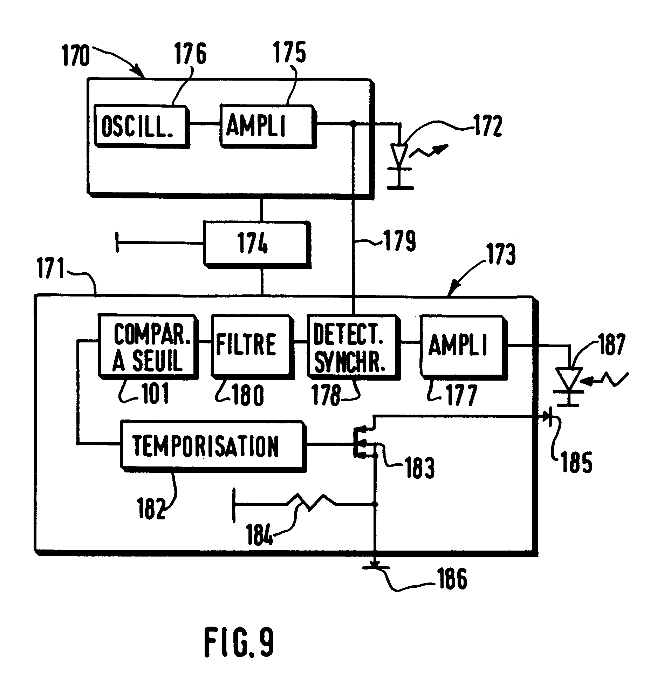

A la figure 9, on a représenté un mode de réalisation plus détaillé du module électronique 97 de la figure 8.

Le module électronique de l'invention comporte principalement une partie 170 d'émission et une partie 171 de réception polarisées par des moyens d'alimentation électrique 174, constitués par exemple par la batterie du véhicule, dont la tension positive est transmise à un régulateur et à un limiteur de surtension intégrés dans le circuit 174. Le circuit 174 comporte deux sorties transmises respectivement à la partie d'émission 170 et à la partie de réception 171.

La partie d'émission 170 comporte principalement au moins une diode infrarouge 172 émettrice de rayonnement infrarouge selon une modulation produite par un oscillateur 176, et transmise par sa sortie connectée à l'entrée d'un amplificateur 175. La sortie de l'amplificateur 175 est connectée à la cathode de la diode 172 dont l'anode émise à la masse ou alimentation négative.

La partie 171 de réception comporte notamment une diode infrarouge de réception 187 dont la cathode est connectée à la masse et l'anode est connectée à l'entrée d'un amplificateur 177 de mise en forme du signal. La sortie de l'amplificateur 177 est connectée à une première entrée d'un circuit détecteur synchrone 178 dont une seconde entrée est connectée par un fil 179 à la sortie de l'amplificateur 175 de la partie d'émission 170. Par détection synchrone, on est capable de détecter un signal provenant de la rétrodiffusion de brouillard suite à l'émission 172.

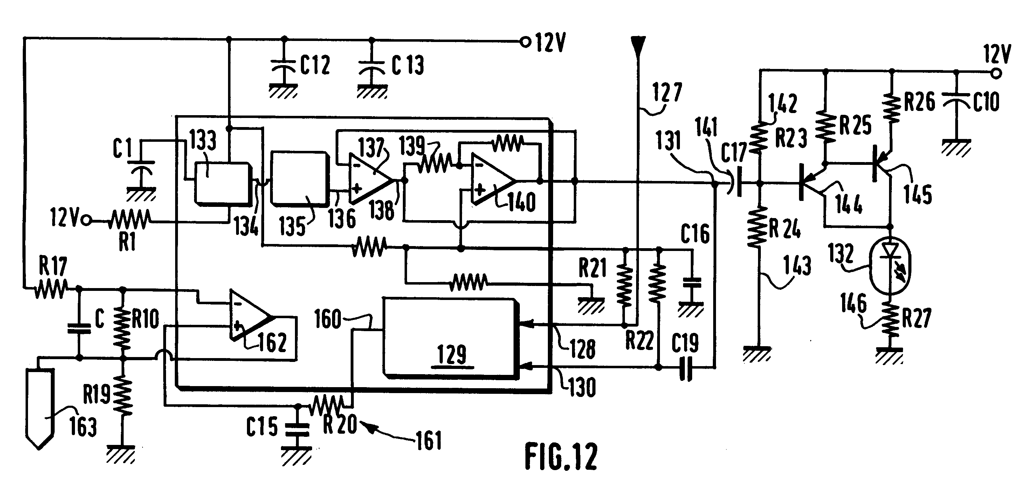

La sortie du détecteur synchrone 178 est connectée à un filtre 180 qui permet de s'affranchir de façon adaptative par exemple dans le cas du circuit de la figure 11, puis à un comparateur à seuil 181 qui permet de réaliser le fonctionnement représenté à la figure 2. Un tel comparateur comporte donc deux niveaux de référence représentatifs des seuils O₁ et O₂ précités. La sortie du comparateur de seuil est transmise à l'entrée d'un circuit de temporisation préfixe de façon à éliminer les successions d'allumage et d'extinction du feu. La sortie des moyens de temporisation sont transmis à l'électrode de commande d'un interrupteur de puissance 183 réalisé par un transistor de puissance à effet de champ. La source du transistor à effet de champ est connectée à une borne de la lampe du feu de brouillard, tandis que le drain est connecté par l'intermédiaire d'une résistance à la masse électrique.

Comme on l'a vu à la figure 8, l'autre borne de la lampe est connectée au + batterie par l'intermédiaire du commodo.

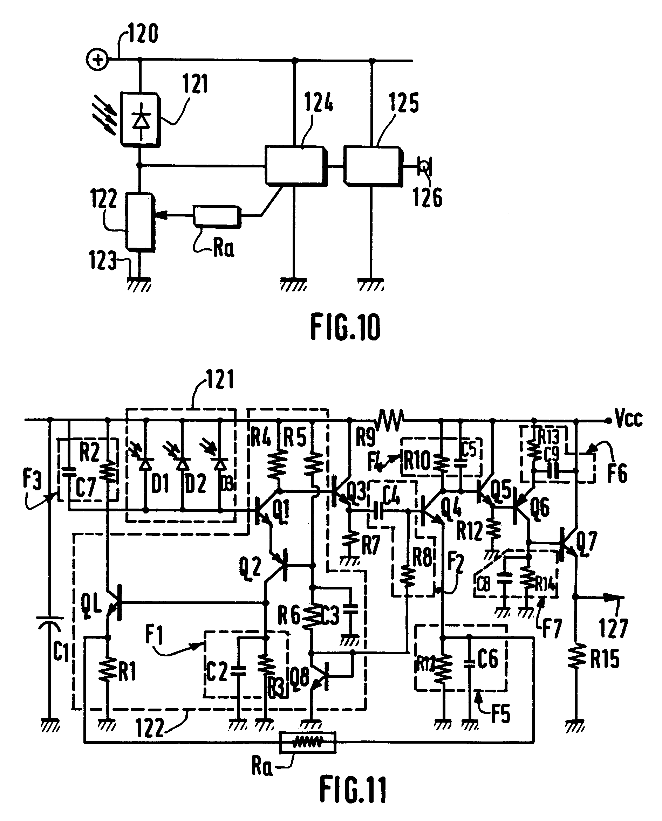

A la figure 10, on a représenté un mode de réalisation préféré de l'amplificateur 177 de la figure 9. Un tel circuit est destiné à être connecté aux moyens d'alimentation 120 du dispositif de l'invention. Un circuit de réception 121 est muni de une à plusieurs diodes de réception infrarouge, montées en parallèle.

La cathode de chaque diode réceptrice est reliée à la borne positive 120 de la batterie et l'anode de chaque diode réceptrice est connectée à la masse 123 par l'intermédiaire d'un circuit de compensation 122. Le rôle du circuit de compensation 122 est de maintenir le point de fonctionnement des diodes de réception infrarouge de façon à compenser notamment le courant de polarisation dû à la lumière du jour.

Le point commun entre les anodes et le circuit de compensation 122 est connecté à un circuit 124 de mise en forme qui comporte un filtre adapté destiné à maximiser le rapport signal/bruit. Le signal de sortie du circuit 124 est transmis à un circuit 125 de détection de signal en fonction du signal infrarouge et la sortie du circuit 125 est fournie à une borne d'un feu de brouillard 126.

Dans un tel schéma, on atteint les objets de l'invention en ce que le circuit de compensation 122 maintient constante la tension aux bornes du circuit de réception 121 et ainsi, permet d'éviter la saturation des diodes infrarouges lors de la détection d'un signal infrarouge. D'autre part, l'étage réalisé par le filtre adapté 124 permet de maximiser le rapport signal/bruit.

A la figure 11, on a développé un mode de réalisation préféré du circuit de réception de l'invention, qui comporte un circuit de réception 121 constitué de diodes D1, D2, D3 montées en parallèle, et connecté à un circuit de compensation 122.

La sortie du circuit de réception 121 est connectée à la première entrée d'un amplificateur différentiel constitué de transistors Q1 et Q2. A cette fin, les anodes des diodes sont connectées ensemble à la base du transistor Q1 de détection dont le collecteur est relié à la borne positive de l'alimentation Vcc par une résistance R4.

Le transistor Q1 est un transistor qui sert de détecteur du courant traversant les diodes et comporte deux sorties : d'une part, une sortie sur son collecteur qui est transmise à la base d'un transistor Q3 et d'autre part, une sortie sur son émetteur qui est connectée à l'émetteur du second transistor complémentaire Q2 de l'amplificateur différentiel. La sortie de collecteur du transistor Q2 est transmise à l'électrode de commande d'un transistor QL dont le chemin collecteur-émetteur relie les anodes des diodes infrarouges D1,D2,D3 à un potentiel fixe comme la masse.

Le transistor Q2 est d'un premier type PNP tandis que les transistors Q1 et Q3 sont d'un second type NPN. La base du transistor Q2 est polarisée par une ligne la reliant par l'intermédiaire d'une résistance R5 à l'alimentation Vcc et d'autre part à la masse par une résistance R6.

Le circuit de compensation 122 constitue en fait un gyrateur réalisant par la fonction d'une inductance synthétique comportant principalement le transistor QL et un filtre passe-haut constitué d'une résistance R3 et d'un condensateur C2, et attaqué par l'amplificateur différentiel Q1,Q2 précité. Dans un autre mode de réalisation, le circuit de compensation est constitué par un gyrateur construit autour d'un ou plusieurs amplificateurs opérationnels.

En courant continu, particulièrement en l'absence de signal utile constitué par une suite d'impulsions, la consommation statique du montage de la figure 11 est plus réduite que celle des réalisations de l'art antérieur. Dans un meilleur mode de réalisation, en l'absence d'illumination, des essais ont montré une consommation de 210 microAmpères.

Le circuit de l'invention est donc adapté à l'usage dans un véhicule, usage dans lequel la consommation la plus réduite possible doit être faite par exemple quand on cherche à réduire la section des fils d'alimentation électrique ou dans le cas du multiplexage automobile.

D'autre part, dans le montage de l'invention, on réalise un filtre passe-bande destiné à rejeter les signaux parasites comme les multiples de l'alimentation électrique du réseau (100 hz). Un tel filtre est composé notamment de l'un au moins des filtres suivants, le mode de réalisation préféré les intégrant tous :
- un premier filtre passe-haut F1 constitué d'une résistance R3 montée en parallèle avec un condensateur C2 sur le collecteur du transistor Q2 ; ce filtre détermine notablement les caractéristiques de l'inductance synthétique réalisée sur le transistor QL ;
- un second filtre passe-haut F2 constitué d'un condensateur C4 en série avec la sortie du transistor Q3 d'amplification et la base d'un transistor Q4 servant de tampon et d'une résistance R8 connectée entre la base du transistor Q4 et un point d'injection de courant sur la ligne de polarisation du second transistor inverseur Q2 de l'amplificateur différentiel ;
- un troisième filtre passe-bas F3 utilisant un effet Miller sur l'entrée du transistor Q1 et mettant en jeu notamment une résistance R2 connectée en parallèle avec une capacité C7 sur le circuit de détection à diodes infrarouges ;
- un quatrième filtre F4 composé d'une résistance R10 et d'une capacité C5 connectées en parallèle entre le collecteur du transistor Q4 et l'alimentation Vcc ;
- un cinquième filtre F5 composé d'une résistance R11 et d'une capacité C6 connectées sur le collecteur du transistor Q4 et la masse ;
- un sixième filtre F6 composé d'une résistance R13 connectée entre le collecteur d'un transistor Q6 et l'alimentation continue Vcc et d'une capacité C9 connectée entre le collecteur du transistor Q6 et le collecteur d'un transistor Q7 de sortie ;
- d'un septième filtre F7 constitué d'une résistance R14 et d'une capacité C8 connectées en parallèle entre l'émetteur d'un transistor Q6 et la masse.

Les valeurs des composants ne sont pas indiquées ici, car elles dépendent des caractéristiques du signal émis. Leur calcul est à la portée de l'homme de métier en fonction des objectifs visés par l'invention.

D'autres filtres peuvent être, selon les applications, avantageusement ajoutés. Ce sont notamment les filtres de découplage des transistors du montage, notamment : le filtre constitué de la résistance R9 et du condensateur électro-chimique C1 qui découple l'alimentation des transistors Q4 et Q3, etc. Le condensateur électrochimique C1 présente une impédance très faible aux hautes fréquences. D'autre part, la base du second transistor Q2 de l'amplificateur différentiel est polarisée entre la tension batterie et la masse par deux résistances R5 et R6 découplées à la masse par une capacité C3 connectée à la base du transistor Q2.

Dans un meilleur mode de réalisation, en l'absence d'illumination, des essais ont montré que le circuit de l'invention présentait au niveau de la base du transistor Q3, une fréquence de coupure basse à environ 8 hz et une fréquence de coupure haute à environ 8 Khz. L'ensemble présente un gain en tension de l'ordre de 30 dB.

Les transistors Q4 et Q6 sont montés avec respectivement, une résistance R10 et un condensateur C5, une résistance R11 et un condensateur C6 et une résistance R12 de façon à augmenter le gain du montage et à couper les fréquences basses par les condensateurs C6 et C8 et les fréquences hautes par les condensateurs C5 et C9.

Les transistors Q3 et Q5 sont montés en collecteur commun. Ils constituent deux étages tampons qui permettent d'augmenter la résistance d'entrée à une valeur proportionnelle à la valeur des résistances R7 et R12 et à diminuer la résistance de sortie avec un gain très légèrement inférieur à l'unité, Q5 en particulier réalise une compensation en température de Q6.

Le transistor Q8, qui sert de point d'injection précité, est un transistor destiné à compenser en température le transistor Q4 en compensant la variation de la tension base-émetteur en température du transistor Q4 par la tension base-émetteur du transistor Q8.

L'étage de sortie du filtre adapté permet de faire fonctionner le transistor Q7 en état bloqué afin de ramener le point de polarisation de l'émetteur du transistor Q7 à zéro. Ainsi, on retrouve un signal utile sans décalage de tension continue.

Dans un autre mode de réalisation, on prélève sur l'émetteur du transistor Q4 une tension de sortie que l'on ramène pour rétro-action sur l'émetteur du transistor QL constituant ainsi un circuit d'apodisation. Dans un mode préféré de réalisation, ce circuit est constitué d'une résistance Ra série. D'une manière générale, ainsi qu'on l'a représenté à la figure 10, l'apodisation est exécutée à l'aide d'un circuit Ra qui injecte une tension proportionnelle au flux continu détecté par les diodes et la réinjecte à l'entrée du circuit de compensation 122. De cette façon, même si le bruit change lors d'une réception d'un signal infrarouge, on assure que seule la fraction du signal détecté au-dessus d'un seuil qui évolue avec le bruit, sera transmise comme signal utile.

L'ensemble du circuit entre la base du transistor Q1 et l'émetteur du transistor Q7 connecté au circuit décodeur des impulsions présente une atténuation de 40 dB par décade aux basses fréquences et une atténuation de 60 dB par décade aux hautes fréquences avec une largeur de bande à -3 dB de 6 Khz environ.

A la figure 12, on a représenté la suite du module électronique utilisant le récepteur d'infrarouge selon le schéma de la figure 11.

La sortie du circuit 127 de la figure 11 est connectée à une entrée 128 d'un circuit 129 de démodulation synchrone. Une autre entrée 130 du circuit 129 est connectée à l'entrée 131 du signal d'activation d'émission de la diode infrarouge d'émission 132.

L'activation de l'entrée 130 et de la diode 132 se fait par l'intermédiaire d'un oscillateur 133 dont une sortie 134 est connectée à l'entrée d'un convertisseur sinus 135 dont la sortie 136 est transmise l'entrée d'un montage adaptateur d'impédance comportant principalement un premier amplificateur opérationnel 137 de gain unité, dont la sortie 138 est connectée par l'intermédiaire d'une résistance de charge 139 à un amplificateur constitué autour d'un amplificateur opérationnel 140 dont la sortie est connectée à l'entrée 131 d'activation de la diode émissive 132.

L'entrée 131 est transmise à une capacité 141 de liaison dont l'autre borne est connectée au point commun de deux résistances d'un pont diviseur respectivement 142 et 143, ledit point commun du pont diviseur étant transmis à la base d'un premier transistor 144 dont l'émetteur est connecté à la base d'un second transistor 145 de façon à constituer un montage Darlington.

Les collecteurs des deux transistors 144 et 145 sont connectés à l'anode de la diode 132 d'émission infrarouge. La cathode de ladite diode infrarouge 132 est connectée à la masse via une résistance de charge 146.

En revenant sur la channe de récepteur, le circuit 129 de démodulation synchrone présente une sortie 160 connectée à un filtre 161 constitué par un circuit RC, dont la sortie est connectée à l'entrée d'un comparateur réalisé autour d'un amplificateur opérationnel 162, dont la sortie est connectée à un connecteur 163 relié à un transistor de commutation permettant d'alimenter ou non les lampes d'éclairage et/ou de signalisation.

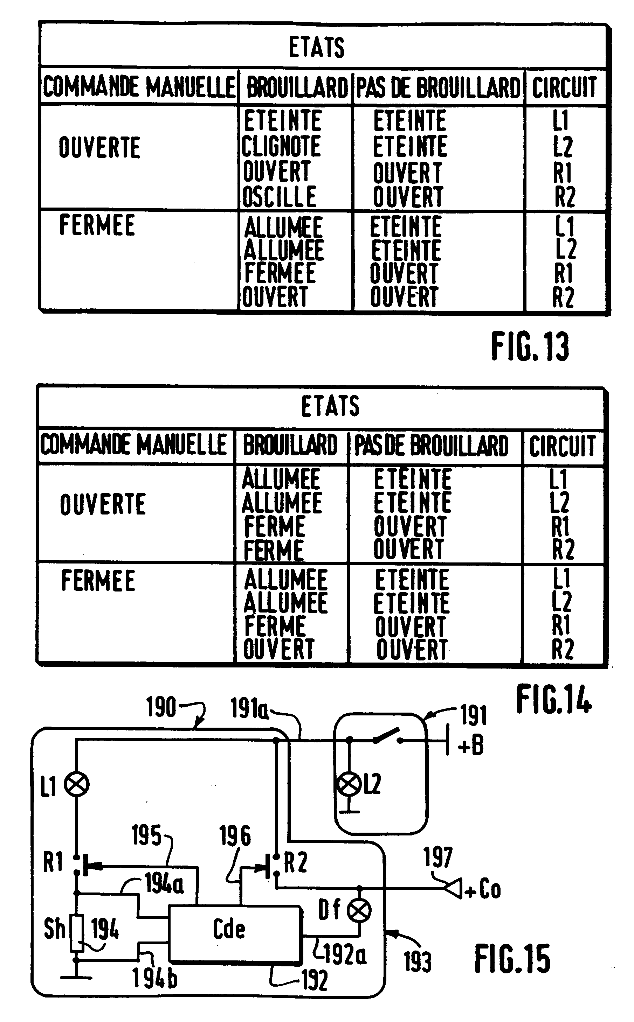

Aux figures 15 et 13 et 14, on a représenté deux modes de fonctionnement des feux de brouillard dans un dispositif d'éclairage et/ou de signalisation.

A la figure 15, on a représenté principalement une partie de la platine électronique 190 installée dans un dispositif à feu de brouillard, et une partie du commodo établi dans l'habitacle du véhicule.

Le commodo 191 comporte un interrupteur d'allumage du feu L1 et une lampe témoin d'allumage du feu L2, le point commun entre l'interrupteur et la lampe est transmis par un fil ou par tout autre moyen à la platine électronique 190. Ici, le circuit de commande 190 n'est polarisé que si l'interrupteur du commodo 191 est fermé, c'est-à-dire seulement si le conducteur allume les feux. En effet le circuit 190 est polarisé à travers le fil de sortie 191a du commodo 190. Dans un autre mode de réalisation, le circuit de commande 190 est directement connecté au + APC, tension positive après contact. En particulier, la liaison peut être réalisée par multiplexage. A l'intérieur de la platine électronique 190 on trouve en particulier une lampe L1 de feu de brouillard. En particulier la lampe L1 peut être multipliée dans plusieurs dispositifs séparés ou non et reliés en parallèle sur le fil précité.

Le pied de lampe L1 est connecté à la masse électrique par l'intermédiaire d'un interrupteur commandé R1. Dans un mode de réalisation, cet interrupteur commandé est réalisé par un relais électromagnétique. Dans un autre mode de réalisation, le relais est remplacé par un transistor de puissance à effet de champ.

Le circuit de commande électronique 192 permet, en recevant les ordres de valididation du détecteur de brouillard non représenté à la figure 15, d'élaborer des signaux de commande sur le fil 195 d'activation ou de fermeture de l'interrupteur commandé R1. Quand le commodo 191 est fermé, l'alimentation de la batterie pôle positif + B est transmise à la platine électronique. Un second fil tiré depuis la ligne reliant la platine 190 au commodo 191 est connecté par l'intermédiaire d'un second interrupteur commandé R2 au feu de code 197.

L'interrupteur commandé R2 reçoit par son électrode de commande un signal 196 issu du circuit de commande électronique 192.

L'interrupteur commandé R1 est connecté à la masse par l'intermédiaire d'une résistance de shunt 194 qui permet par deux prises 194a et 194b au circuit de commande de réaliser une mesure de courant traversant le feu de brouillard. Si quand le signal 195 est actif, aucun courant ne traverse le shunt, le circuit électronique qui comporte entre les deux entrées 194a et 194b, un circuit de mesure de courant, émet sur une sortie 192a un signal indiquant une défaillance des feux de brouillard. Ce signal peut être transmis à distance par exemple dans l'habitacle sous la forme de l'allumage d'une lampe témoin Df d'indication de défaillance des feux de brouillard. Dans un autre mode de réalisation, le message attirant l'attention du conducteur sur la défaillance du feu de brouillard est de type vocal produit par un synthétiseur vocal.

En fonction de la fermeture de l'interrupteur du commodo 191 et du signal de détection de brouillard reçu par le circuit de commande 192, le circuit de commande 192 peut gérer selon plusieurs stratégies l'allumage ou non du feu de brouillard.

Aux figures 13 et 14, on a représenté deux telles stratégies dans deux modes de réalisation différents.

Les figures 13 et 14 sont constituées par des tableaux d'état. La commande manuelle indiquée dans la première colonne représente l'état ouvert ou fermé de l'interrupteur du commodo. La dernière colonne la plus à droite du tableau récite dans chacun des états de la commande manuelle ouverte ou fermée les quatre éléments indiqués dans le tableau L1,L2,R1,R2 en référence à la figure 15.

Les deux colonnes centrales indiquent selon la détection de brouillard l'état des quatre éléments précités du circuit de commande 192.

A la figure 13, quand le détecteur de brouillard est actif, si la commande manuelle est ouverte, ce qui indique que le conducteur en particulier ne désire pas allumer les codes 197, la lampe L1 est éteinte, la lampe L2 clignote quand l'interrupteur R1 est ouvert.

Quand il n'y a pas de brouillard, les lampes L1 et L2 sont éteintes, tandis que les relais R1 et R2 sont ouverts.

Quand la commande manuelle est fermée, et que le détecteur de brouillard détecte du brouillard, le relais R1 est fermé, tandis que le relais R2 peut être ouvert ou fermé. Quand le détecteur envoie un signal non valide, les lampes L1 et L2 sont éteintes et les relais R1 et R2 sont ouverts.

A la figure 14, on a représenté une autre stratégie dans laquelle l'état des quatre éléments du circuit sont identiques sauf dans le cas où la commande manuelle est ouverte et où on a détecté du brouillard la lampe L2 restant constamment allumée.

## Revendications

1. Dispositif d'éclairage et/ou de signalisation, tel qu'un feu arrière de brouillard, dispositif notamment destiné à être embarqué à bord d'un véhicule comme une automobile et comportant des moyens d'éclairage et/ou de signalisation, une alimentation électrique (1), un circuit de commande (3) connectant l'alimentation électrique (1) auxdits moyens d'éclairage et/ou de signalisation (2), caractérisé en ce qu'il comporte des moyens détecteurs de brouillard (4) produisant un signal d'activation (10) quand une condition de non visibilité est atteinte dans le milieu sur le trajet des rayons lumineux (5,6) d'éclairage et/ou de signalisation et activant ledit circuit de commande (3), et en ce que lesdits moyens (4) détecteurs de brouillard émettent un signal d'activation (10) valide quand ils détectent la présence d'un brouillard dont l'opacité est supérieure à un premier seuil d'opacité (O1) déterminé, provoquent l'interruption de l'alimentation électrique, ou l'interdisent, et ainsi assurent l'extinction des moyens (2) d'éclairage et/ou de signalisation lorsque lesdits moyens détecteurs de brouillard détectent l'absence de brouillard ou l'existence d'un brouillard dont l'opacité est inférieure à un second seuil d'opacité (O2) déterminé inférieur ou égal audit premier seuil d'opacité (O1).

2. Dispositif selon la revendication 1, caractérisé en ce que ledit circuit de commande comporte des moyens de temporisation adaptés à n'autoriser un changement d'état du dispositif d'éclairage et/ou de signalisation qu'à l'issue d'un intervalle de temps prédéterminé pendant lequel l'indication desdits moyens (4) détecteurs de brouillard est constamment supérieure à une valeur de déclenchement correspondant audit premier seuil d'opacité (O1) ou inférieure à une valeur d'arrêt correspondant audit second seuil d'opacité (O2).

3. Dispositif selon la revendication 2, caractérisé en ce que ledit circuit de commande comporte aussi des moyens de sélection pour activer une comparaison d'un signal émis par les moyens détecteurs à ladite valeur de déclenchement ou à ladite valeur d'arrêt selon que le dispositif d'éclairage et/ou de signalisation se trouve respectivement à l'état éteint ou à l'état allumé.

4. Dispositif selon l'une des revendications 1 à 3, caractérisé en ce que des moyens de détection de panne sont prévus qui, sensibles à une défaillance desdits moyens détecteurs et/ou dudit circuit de commande, sont adaptés à mettre dans un état prédéterminé, allumé ou éteint, de préférence allumé, le dispositif d'éclairage et/ou de signalisation.

5. Dispositif selon l'une des revendications précédentes, caractérisé en ce que ledit circuit de commande comporte des moyens d'émission d'une information sous une forme permettant d'attirer l'attention du conducteur sur la nécessité d'allumer des projecteurs d'éclairage et/ou de signalisation.

6. Dispositif selon la revendication 5, caractérisé en ce que les moyens d'émission d'une information permettant d'attirer l'attention du conducteur sur la nécessité d'allumer des projecteurs d'éclairage et/ou feux de signalisation du véhicule comportent une ligne de transmission d'un signal d'information généré par un circuit d'information disposé dans ledit circuit de commande, ladite ligne de transmission étant connectée à un récepteur d'information qui actionne un circuit d'alimentation d'une lampe témoin au tableau de bord du véhicule, comme la lampe indiquant usuellement l'allumage d'un dispositif d'éclairage et/ou de signalisation, notamment en générant un clignotement.

7. Dispositif selon l'une des revendications précédentes, caractérisé en ce que ledit circuit de commande est automatiquement polarisé par l'allumage sur le commodo des projecteurs et/ou des feux du véhicule, en particulier des projecteurs de croisement.

8. Dispositif selon la revendication 7, caractérisé en ce que ledit circuit de commande est activé lorsque, à la fois, les projecteurs et/ou feux du véhicule sont obturés et un interrupteur de mise en service des projecteurs et/ou feux de brouillard est fermé.

9. Dispositif selon l'une des revendications précédentes, caractérisé en ce que lesdits moyens détecteurs (4) comprennent un émetteur et un récepteur d'ondes électromagnétiques qui sont disposés à l'intérieur du dispositif d'éclairage et/ou de signalisation, de préférence côte à côte, en étant tournés vers l'extérieur du dispositif d'éclairage et/ou de signalisation.

10. Dispositif selon la revendication 9, caractérisé en ce que lesdits émetteur et récepteur d'ondes électromagnétiques fonctionnent en rayonnement infrarouge modulé et comprennent respectivement au moins une diode infrarouge émettrice et une diode infrarouge réceptrice et un circuit de modulation.

11. Dispositif selon la revendication 9, caractérisé en ce que lesdits moyens détecteurs sont placés à l'intérieur d'au moins un bloc de feux de signalisation d'un véhicule, dans lequel est inséré ledit dispositif d'éclairage et/ou de signalisation.

12. Dispositif selon les revendications 10 et 11, caractérisé en ce que lesdits moyens détecteurs comprennent au moins une diode infrarouge émettrice disposée de manière à émettre dans une direction longitudinale du bloc de feux de signalisation, correspondant à la direction longitudinale du véhicule équipé, et au moins une diode infrarouge réceptrice disposée à proximité de ladite diode émettrice, orientée dans une direction se rapprochant de ladite direction longitudinale selon un angle compris entre 5° et 45°, et de préférence voisin de 15°, des moyens d'isolation étant prévus pour empêcher tout trajet direct de la diode émettrice vers la diode réceptrice.

13. Dispositif selon la revendication 12, caractérisé en que les directions d'émission et de réception desdites diodes d'émission et de réception s'écartent d'une direction horizontale, vers le haut, selon un angle compris entre 5° et 45°, et de préférence jusqu'à un angle de 90° si l'encombrement est libre au-dessus du feu de signalisation par une fenêtre au-dessus du bord du feu.

14. Dispositif selon l'une des revendications 9 et 10, caractérisé en ce que ledit circuit de modulation et ledit circuit de commande sont avantageusement disposés dans ledit bloc de feux de signalisation, à proximité desdits moyens détecteurs, et plus particulièrement derrière un voyant catadioptrique.

15. Dispositif selon l'une des revendications précédentes, caractérisé en ce que lesdits moyens de commande comportent des moyens de branchement vers au moins un autre dispositif d'éclairage et/ou de signalisation, de telle sorte que le circuit de commande provoque simultanément l'allumage et l'extinction d'une paire de feux de brouillard ou d'une paire de projecteurs anti-brouillard ou l'ensemble de projecteurs et d'un ou plusieurs feux de brouillard.

16. Dispositif selon la revendication 9, caractérisé en ce que l'émetteur (51) ou le récepteur (64) d'ondes électromagnétiques sont couplés à des moyens de collimation (52,65) des faisceaux émis ou reçus.

17. Dispositif selon la revendication 16, caractérisé en ce que le faisceau émis ou reçu (62,59 ; 71) est focalisé par une optique convergente (60,54 ; 67,73).

18. Dispositif selon la revendication 17, caractérisé en ce que l'optique convergente est réalisée directement sur la paroi de séparation (55) séparant le dispositif du milieu environnant, par une surface concave (57 ; 73) dirigée vers ledit moyen émetteur ou récepteur.

## Claims

1. Apparatus for lighting and/or indicating, for example a rear fog lamp, the apparatus being in particular adapted to be fitted on a vehicle such as a motor car, and comprising lighting and/or indicating means, an electrical supply means (1), and a control circuit (3) connecting the electrical supply means (1) to the said lighting and/or indicating means (2), characterised in that it comprises fog detector means (4), for giving an activating signal when a condition of non-visibility is reached in the environment in the path of lighting and/or indicating light rays (5, 6), and for activating the said control circuit (3), and in that the said fog detector means (4) emit a valid activating signal (10) when they detect the presence of fog having an opacity greater than a first predetermined opacity threshold (O1), and cause the electrical supply to be interrupted or prevented, and thus cause the lighting and/or indicating means (2) to be extinguished, when the said fog detector means detect the absence of fog or the existence of fog having an opacity below a second predetermined opacity threshold (O2), which is smaller than or equal to the said first opacity threshold (O1).

2. Apparatus according to Claim 1, characterised in that the said control circuit includes timing means adapted to cause a change of state in the lighting and/or indicating apparatus to be effected only after the lapse of a predetermined period of time, during which the signal from the said fog detector means (4) remains greater than a trigger value corresponding to the said first opacity threshold (O1), or less than a cancellation value corresponding to the said second opacity threshold (O2).

3. Apparatus according to Claim 2, characterised in that the said control circuit further includes selection means for activating a comparison of a signal emitted by the detector means with the said trigger value or with the said cancellation value, according to whether the lighting and/or indicating apparatus is, respectively, in the extinguished or illuminated state.

4. Apparatus according to one of Claims 1 to 3, characterised in that failure detecting means are provided which, being sensitive to a fault condition in the said detector means and/or in the said control circuit, are adapted to put the apparatus into a predetermined state, illuminated or extinguished and preferably illuminated, of the lighting and/or indicating apparatus.

5. Apparatus according to one of the preceding Claims, characterised in that the said control circuit includes means for emitting an information signal in a form enabling the attention of the driver to be drawn to the need for turning on lighting and/or indicating lamps.

6. Apparatus according to Claim 5, characterised in that the means for emitting an information signal for enabling the driver's attention to be drawn to the need for turning on lighting lamps and/or side lamp displays of the vehicle include a line for transmission of an information signal generated by an information circuit disposed in the said control circuit, the said transmission line being connected to an information signal receiver which activates a power supply circuit for a warning lamp on the fascia of the vehicle, for example the lamp which conventionally indicates that a lighting and/or indicating apparatus is lit, in particular by flashing.

7. Apparatus according to one of the preceding Claims, characterised in that the said control circuit is automatically polarised by the illumination of the driving lamps and/or side lamp displays of the vehicle, in particular headlamps, from the driver's control means.

8. Apparatus according to Claim 7, characterised in that the said control circuit is activated when the headlamps and/or side lamp displays of the vehicle are not illuminated, and, at the same time, a control interruptor for the driving lamps and/or fog lamps is closed.

9. Apparatus according to one of the preceding Claims, characterised in that the said detector means (4) comprise an emitter and a receiver for electromagnetic waves, which are disposed inside the lighting and/or indicating apparatus, preferably side by side and facing outwardly from the lighting and/or indicating apparatus.

10. Apparatus according to Claim 9, characterised in that the said emitter and receiver for electromagnetic waves operate on modulated infrared radiation, and comprise, respectively, at least one infrared emitting diode and an infrared receiving diode, together with a modulating circuit.

11. Apparatus according to Claim 9, characterised in that the said detector means are located inside at least one side lamp display unit of a vehicle, in which the said lighting and/or indicating apparatus is inserted.

12. Apparatus according to Claims 10 and 11, characterised in that the said detector means comprise at least one infrared emitting diode, so disposed as to emit in a longitudinal direction of the side lamp display unit corresponding to the longitudinal direction of the vehicle equipped with it, and at least one infrared receiving diode disposed close to the said emitting diode and orientated in a direction making an angle in the range between 5° and 45°, and preferably in the region of 15°, with the said longitudinal direction, with isolation means being provided for preventing any direct light path from the emitting diode to the receiving diode.

13. Apparatus according to Claim 12, characterised in that the directions of emission and reception of the said emitting and receiving diodes deviate upwardly from a horizontal direction by an angle in the range between 5° and 45°, and preferably up to an angle of 90° if there is free space above the side lamp display through a window above the edge of the display.

14. Apparatus according to Claim 9 or Claim 10, characterised in that the said modulating circuit and the said control circuit are preferably disposed within the said side lamp display unit, close to the said detector means, and more particularly behind a catadioptric element.

15. Apparatus according to one of the preceding Claims, characterised in that the said control means include means for connection to an least one further lighting and/or indicating apparatus, in such a way that the control circuit causes simultaneous illumination and simultaneous extinction of a pair of rear fog lights or a pair of fog driving lamps, or all of the driving lamps and one or more rear fog lights.

16. Apparatus according to Claim 9, characterised in that the emitter (51) or the receiver (64) for electromagnetic waves are coupled to collimating means (52, 65) for the emitted or received beams.

17. Apparatus according to Claim 16, characterised in that the emitted or received beam (62, 59; 71) is focussed by a convergent optical element (60, 54; 67, 73).

18. Apparatus according to Claim 17, characterised in that the convergent optical element is formed directly on the partition wall (55) that separates the apparatus from its environment, in the form of a concave surface (57; 73) which is directed towards the said emitter or receiver means.

## Patentansprüche

1. Beleuchtungs- und/oder Anzeigevorrichtung, wie etwa eine Nebelschlußleuchte, insbesondere für den Einbau in einem Fahrzeug, etwa in einem Kraftfahrzeug, bestehend aus Beleuchtungs- und/oder Anzeigemitteln, einer Stromversorgung (1), einer Steuerschaltung (3) für den Anschluß der Stromversorgung (1) an die besagten Beleuchtungs- und/oder Anzeigemittel (2)**, dadurch gekennzeichnet,** daß sie Nebelerfassungsmittel (4) umfaßt, die ein Aktivierungssignal (10) erzeugen, wenn eine Sichtbehinderung in der Umgebung auf dem Verlauf der Beleuchtungs- und/oder Anzeige-Lichstrahlen (5, 6) erreicht ist, und die genannte Steuerschaltung (3) aktivieren, und daß die genannten Nebelerfassungsmittel (4) ein gültiges Aktivierungssignal (10) senden, wenn sie das Vorhandensein eines Nebels erfassen, dessen Opazität über einer bestimmten ersten Opazitätsschwelle (O1) liegt, die Unterbrechung der Stromversorgung oder ihre Sperrung bewirken und so die Ausschaltung der Beleuchtungs- und/oder Anzeigemittel (2) herbeiführen, wenn die genannten Nebelerfassungsmittel das Nichtvorhandensein von Nebel oder das Vorhandensein eines Nebels erfassen, dessen Opazität unter einer bestimmten zweiten Opazitätsschwelle (O2) liegt, die kleiner oder gleich der ersten Opazitätsschwelle (O1) ist.

2. Vorrichtung nach Anspruch 1 , **dadurch gekennzeichnet,** daß die genannte Steuerschaltung Verzögerungsmittel umfaßt, die entsprechend angepaßt sind, um eine Zustandsänderung der Beleuchtungs- und/oder Anzeigevorrichtung erst nach Ablauf eines vorbestimmten Zeitintervalls freizugeben, während dem die Anzeige der genannten Nebelerfassungsmittel (4) ständig über einem Einschaltwert, welcher der genannten ersten Opazitätsschwelle (O1) entspricht, oder unter einem Abschaltwert liegt, welcher der genannten zweiten Opazitätsschwelle (O2) entspricht.

3. Vorrichtung nach Anspruch 2 , **dadurch gekennzeichnet,** daß die genannte Steuerschaltung außerdem Auswahlmittel umfaßt, um einen Vergleich eines durch die Erfassungsmittel ausgegebenen Signals mit dem genannten Einschaltwert oder mit dem genannten Abschaltwert zu aktivieren, je nachdem, ob sich die Beleuchtungs- und/oder Anzeigevorrichtung im ausgeschalteten Zustand oder im eingeschalteten Zustand befindet.

4. Vorrichtung nach einem der Ansprüch 1 bis 3, **dadurch gekennzeichnet,** daß Mittel zur Störungserfassung vorgesehen sind, die auf einen Ausfall der genannten Erfassungsmittel und/oder der genannten Steuerschaltung ansprechen und geeignet sind, die Beleuchtungs- und/oder Anzeigevorrichtung in einen vorbestimmten, ein- oder ausgeschalteten, vorzugsweise eingeschalteten Zustand zu bringen.

5. Vorrichtung nach einem der vorangehenden Ansprüche, **dadurch gekennzeichnet,** daß die genannte Steuerschaltung Mittel zur Ausgabe einer Information in einer Form umfassen, die es ermöglicht, die Aufmerksamkeit des Fahrers auf die Notwendigkeit einer Einschaltung der Beleuchtungs- und/oder Anzeigescheinwerfer zu lenken.

6. Vorrichtung nach Anspruch 5 , **dadurch gekennzeichnet,** daß die Mittel zur Ausgabe einer Information, die es ermöglicht, die Aufmerksamkeit des Fahrers auf die Notwendigkeit einer Einschaltung der Beleuchtungs- und/oder Anzeigescheinwerfer des Fahrzeugs zu lenken, eine Leitung für die Übertragung eines Informationssignals umfassen, das durch eine in der genannten Steuerschaltung angeordnete Informationsschaltung erzeugt wird, wobei die genannte Übertragungsleitung an einen Informationsempfänger angeschlossen ist, der eine Speiseschaltung für eine Kontrollampe am Armaturenbrett des Fahrzeugs betätigt, wie etwa die Lampe, die üblicherweise die Einschaltung einer Beleuchtungs- und/oder Anzeigevorrichtung anzeigt, insbesondere durch Erzeugung einer Blinkanzeige.

7. Vorrichtung nach einem der vorangehenden Ansprüche, **dadurch gekennzeichnet,** daß die genannte Steuerschaltung automatisch durch das Einschalten der Scheinwerfer und/oder der Leuchten des Fahrzeugs, insbesondere der Abblendscheinwerfer, am Mehrfachschalter vorgespannt wird.

8. Vorrichtung nach Anspruch 7 , **dadurch gekennzeichnet,** daß die genannte Steuerschaltung aktiviert wird, wenn die Scheinwerfer und/oder Leuchten des Fahrzeugs verschlossen sind und gleichzeitig ein Schalter für die Einschaltung der Scheinwerfer und/oder Nebelschlußleuchten geschlossen wird.

9. Vorrichtung nach einem der vorangehenden Ansprüche, **dadurch gekennzeichnet,** daß die genannten Erfassungsmittel (4) einen Sender und einen Empfänger für elektromagnetische Wellen umfassen, die im Innern der Beleuchtungs- und/oder Anzeigevorrichtung, vorzugsweise nebeneinander, angeordnet und zur Außenseite der Beleuchtungs- und/oder Anzeigevorrichtung gerichtet sind.

10. Vorrichtung nach Anspruch 9, **dadurch gekennzeichnet,** daß der genannte Sender und Empfänger für elektromagnetische Wellen mit einer modulierten Infrarotstrahlung arbeiten und mindestens eine Infrarotsenderdiode bzw. eine Infrarotempfängerdiode sowie eine Modulationsschaltung umfassen.

11. Vorrichtung nach Anspruch 9**, dadurch gekennzeichnet,** daß die genannten Erfassungsmittel im Innern mindestens eines Signalleuchtenblocks eines Fahrzeugs angeordnet sind, in dem die genannte Beleuchtungs- und/oder Anzeigevorrichtung eingebaut ist.

12. Vorrichtung nach den Ansprüchen 10 und 11 , **dadurch gekennzeichnet,** daß die genannten Erfassungsmittel mindestens eine Infrarotsenderdiode enthalten, die so angeordnet ist, daß sie in einer Längsrichtung des Signalleuchtenblocks abstrahlt, die der Längsrichtung des damit ausgerüsteten Fahrzeugs entspricht, sowie mindestens eine Infrarotempfängerdiode, die in der Nähe der genannten Senderdiode angeordnet ist und in einer Richtung verläuft, die sich der genannten Längsrichtung in einem Winkel zwischen 5° und 45°, vorzugsweise etwa 15°, annähert, wobei Trenmittel vorgesehen sind, um jeden direkten Verlauf der Senderdiode zur Empfängerdiode zu verhindern.

13. Vorrichtung nach Anspruch 12, **dadurch gekennzeichnet,** daß die Sende- und Empfangsrichtungen der genannten Sende- und Empfangsdioden sich von einer horizontalen Richtung nach oben in einem Winkel zwischen 5° und 45° und vorzugsweise bis zu einem Winkel von 90° entfernen, wenn der Platz oberhalb der Signalleuchte durch ein Fenster über der Leuchtenkante freigegeben ist.

14. Vorrichtung nach einem der Ansprüche 9 und 10, **dadurch gekennzeichnet,** daß die genannte Modulationsschaltung und die genannte Steuerschaltung vorteilhafterweise in den besagten Signalleuchtenblock in der Nähe der genannten Erfassungsmittel, insbesondere hinter einem Rückstrahler, angeordnet sind.

15. Vorrichtung nach einem der vorangehenden Ansprüche , **dadurch gekennzeichnet,** daß die genannten Steuermittel Anschlußmittel zu mindestens einer anderen Beleuchtungs- und/oder Anzeigevorrichtung umfassen, so daß die Steuerschaltung gleichzeitig das Einschalten und das Ausschalten eines Nebelleuchtenpaars oder eines Nebelscheinwerferpaars bzw. aller Scheinwerfer und eines oder mehrerer Nebelleuchten bewirkt.

16. Vorrichtung nach Anspruch 9, **dadurch gekennzeichnet,** daß der Sender (51) oder der Empfänger (64) für elektromagnetische Wellen an Kollimationsmittel (52, 65) für die abgestrahlten oder empfangenen Strahlenbündel gekoppelt sind.

17. Vorrichtung nach Anspruch 16, **dadurch gekennzeichnet,** daß das abgestrahlte oder empfangene Strahlenbündel (62, 59; 71) durch eine konvergierende Optik (60, 54; 67, 73) gebündelt wird.

18. Vorrichtung nach Anspruch 17, **dadurch gekennzeichnet,** daß die konvergierende Optik direkt an der Trennwand (55) zur Abtrennung der Vorrichtung von ihrer Umgebung durch eine konkave Fläche (57; 73) gebildet wird, die zu dem genannten Sender- oder Empfängermittel gerichtet ist.
